Europäisches Patentamt

European Patent Office

Office européen des brevets

(19)

(11) Publication number: **0 201 088**
**A2**

# EUROPEAN PATENT APPLICATION

(21) Application number: **86106205.7**

(22) Date of filing: **06.05.86**

(51) Int. Cl.⁴: **G 06 F 15/16**

(30) Priority: **10.05.85 JP 97811/85**

(43) Date of publication of application: **12.11.86**
**Bulletin 86/46**

(84) Designated Contracting States: **DE FR**

(71) Applicant: **HITACHI, LTD., 6, Kanda Surugadai 4-chome Chiyoda-ku, Tokyo 100 (JP)**

(72) Inventor: **Takahashi, Fumio,**
**Zikyo-ryo. 210, 6-12-1 Ayukawa-cho, Hitachi-shi Ibaraki-ken (JP)**
Inventor: **Nagaoka, Yukio, 1429-11, Suwama Toukai-mura, Maka-gun Ibaraki-ken (JP)**
Inventor: **Harada, Iwao, 2607-8, Motoyoshida-cho, Mito-shi Ibaraki-ken (JP)**
Inventor: **Nishihara, Yoshihiro,**
**Ibasen-ryo. 212, 2-28-1 Nishinarusawa-cho, Hitachi-shi Ibaraki-ken (JP)**

(74) Representative: **Strehl, Schübel-Hopf, Groening, Schulz, Widenmayerstrasse 17 Postfach 22 03 45, D-8000 München 22 (DE)**

(54) **Parallel computer.**

(57) A parallel computer comprises a plurality of processors (1), a plurality of buffer memories (2), data lines (201) interconnecting the buffer memories (2) in a chained manner, and a plurality of data transfer control circuits (3) inserted between the processors (1) and the data lines (201). This parallel computer simultaneously executes calculation and input/output of data.

## PARALLEL COMPUTER

## BACKGROUND OF THE INVENTION

The present invention relates to a parallel computer, and more particularly, to a parallel computer which is suitable for finding numerical solutions to partial differenctial equations by parallel processing.

## DESCRIPTION OF THE PRIOR ART

Computers have heretofore been developed which are capable of effecting parallel processing by utilizing a plurality of processors. In particular, a parallel computer which is suitable for solving partial differential equations has been proposed in ACM Transactions on Computer Systems, Vol. 1, No. 3, August 1983, Pgs. 195 to 221. In this conventional type of parallel computer, adjacent processors are connected via a shared memory, and the processors, as a whole, are arranged in the form of a one-dimensional or two-dimensional lattice. For data transfer between adjacent processors, the processor on the transmission side stores data in a memory shared with the other processor on the reception side, and the data stored in the memory is input to the reception-side processor. However, such a computer involves disadvantage in that it takes a long time to transfer data between processors which are not adjacent to each other.

In order to exemplify the problem of the above-described conventional parallel computer, description will be made below of the procedure of obtaining numerical values of $\phi$ and E from the following equations:

$$
\left.\begin{array}{l}
\dfrac{\partial \phi}{\partial t} = \dfrac{\partial^2 \phi}{\partial x^2} \\[3mm]
E = \dfrac{\partial \phi}{\partial x}
\end{array}\right\} \quad (1)
$$

The difference equations of the equations (1) are given by:

$$
\left.\begin{array}{l}
\phi_1^{(n+1)} = \lambda\,(\phi_{i+1}^{(n)} + \phi_{i-1}^{(n)}) \\[2mm]
\qquad\qquad + (1 - 2\lambda)\,\phi_i^{(n)} \\[4mm]
E_i^{(n)} = \dfrac{\phi_{i+1}^{(n)} + \phi_{i-1}^{(n)}}{2\Delta x}
\end{array}\right\} \quad (2)
$$

where i is an index representing a discrete value of X and n is an index representing a discrete value of t.

A processor $P_i$ computes $\phi_i^{(n)}$ at a given lattice point i. Processors $P_{i+1}$ and $P_{i-1}$ compute $\phi_{i+1}^{(n)}$ and $\phi_{i-1}^{(n)}$ on the right side of the equation (2). In order that processor $P_i$ executes the calculation, it is necessary for processor $P_i$ to receive

the data output from the adjacent processors $P_{i+1}$ and $P_{i-1}$, and store the received data in a memory. In addition, a data item $\phi_i^{(n+1)}$ computed by the processor $P_i$ is needed by processors $P_{i+1}$ and $P_{i-1}$ in the next step, so that the data item $\phi_i^{(n+1)}$ must be output to processors $P_{i+1}$ and $P_{i-1}$. Therefore, in processor $P_i$, processing is performed in the following order: (a) a step of receiving the inputs from processors $P_{i+1}$ and $P_{i-1}$ ; (2) a step of computing the equations (2); and (c) a step of outputting the results to processors $P_{i+1}$ and $P_{i-1}$. In consequence, prior-art computers have involved disadvantage in that the time $t_d$ is required for input (a) and output (c) in addition to the time $t_c$ required for calculation (b).

SUMMARY OF THE INVENTION

Accordingly, it is an object of the present invention to provide a parallel computer which has a plurality of processors connected in a chained manner and enables high-speed data transfer between processors which are remote from each other.

It is another object of the present invention to provide a parallel computer which has a plurality of processors connected in a chained manner and wherein an input/output procedure is contained within a calculation procedure, thereby enabling a reduction in the time required for input and output.

In the parallel computer of this invention, a single processor is connected to each of data lines which can catenate first-in, first-out buffer memories (herein referred to as "FIFO buffer memory") so as to effect input to and output from each FIFO buffer memory independently of the operating conditions of the other processors, and input/output operations are performed during calculations in accordance with a correspondence table of the data which is input to and output from components other than the processors.

The above and other objects, features and advantages of the present invention will become apparent from the following description of the preferred embodiment thereof, taken in conjunction with the accompanying drawings.

BRIEF DESCRIPTION OF THE DRAWINGS

Fig. 1 is a flow chart of a parallel calculation executed by the parallel computer in accordance with the present invention;

Fig. 2 shows the construction of the parallel computer of a prior application filed by the same applicant;

Fig. 3 shows the construction of one embodiment of the parallel computer in accordance with the present invention;

Fig. 4 shows the construction of one processor section incorporated in the parallel computer of the present invention;

Fig. 5 shows the detailed construction of the address-supervising circuit shown in Fig. 4;

Fig. 6 shows the detailed construction of the input/output signal generation circuit shown in Fig. 5;

Fig. 7 shows the detailed construction of a data transfer control circuit section incorporated in the parallel computer of the present invention; and

Fig. 8 is a flow chart of parallal calculation (one example of a two-dimensional problem) performed by the parallel computer of the present invention.

DESCRIPTION OF THE PREFERRED EMBODIMENT

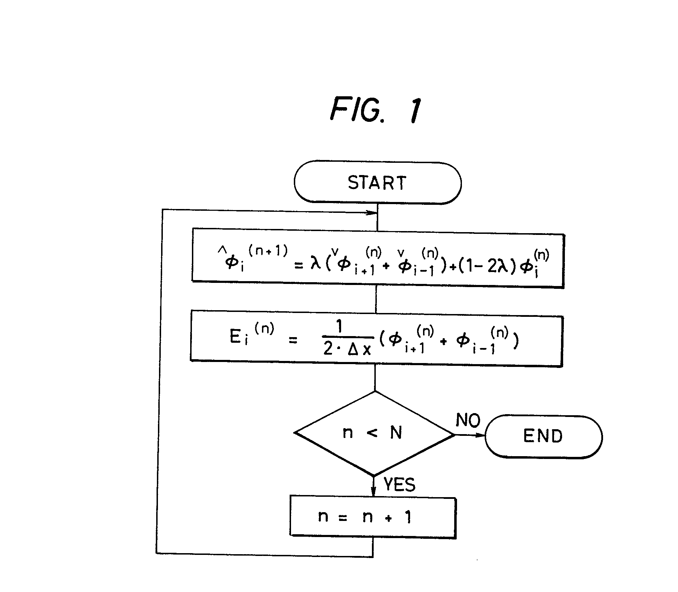

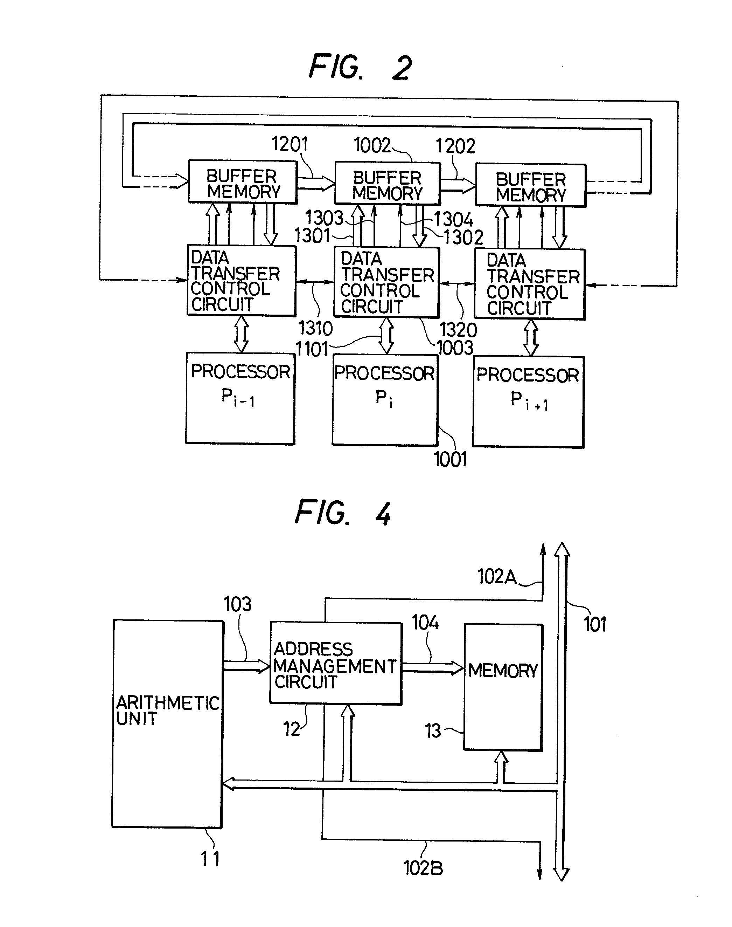

The present invention has been devised as a result of consideration being given to a method of simultaneously executing calculation and input/output. As can be seen from Fig. 1, the time required for input and output can be reduced if the procedure of input/output is contained within that for calculation. In Fig. 1, symbol $^{\vee}$ denotes data which is output by the processors $P_{i+1}$ and $P_{i-1}$ and is received by the processor $P_i$. When processor $P_i$ refers to a specific address of the memory thereof, and it stores the data in the specific address of the memory. The stored data is used as an operand for calculation. Symbol $\wedge$ denotes the data which is output to the processors $P_{i + 1}$ and $P_{i - 1}$ when it is stored in a specific address of the memory after completion of calculation. Fig. 2 shows the parallel computer disclosed in the specification of Japanese Patent Application No. 273061/1984 which was filed by the same applicant on December 26, 1984. Such a parallel computer is arranged in such a manner that a single first-in, first-out buffer memory 1002 is connected to a single processor 1001, and the input and output of the FIFO buffer memory 1002 is controlled by the processor 1001 which is connected to the buffer memory 1002. When such a computer is to execute calculation for simultaneously executing the calculation and the input/output shown in Fig. 1, if the time when processor $P_i$ outputs a data $\wedge \phi_i$ after completion of the right-side calculation is simultaneous with the time when the adjacent processor $P_{i - 1}$ receives an input $^\vee \phi_{i - 2}$ while it is calculating the right side of the equation, the data items $\wedge \phi_i$ and $^\vee \phi_{i - 2}$ appear in a data line 1201 at the same time, thereby causing interference between the two. Therefore, synchronization has heretofore been needed in order to make it possible for all the processors to simultanously perform input or output operations.  For this reason, it has been impossible to carry out calculation and input/output at the same time.  The present invention is designed to enable parallel calculation as shown in Fig. 1 without impairing the data transfer between processors remote from each other which constitutes the advantage of the above-described invention disclosed in the specification of Japanese Patent Application No. 273061/1984.  The present invention has been devised by taking notice of the fact that a single processor is connected to the data line 1201 connecting the FIFO buffer memories and the data appearing in the data line 1201 is controlled by the processor connected to the data line 1201, thereby making it possible to eliminate contention on the data line.  In addition, address-supervising circuits are provided which monitor the address of the memory in which array { $\phi_i$ } is stored.  When reference is made to the data item $\overset{v}{\phi}_{i \pm 1}$ as an operand for calculation, the data item $\overset{v}{\phi}_{i \pm 1}$ is input from the FIFO buffer memory and is stored into the memory, and when the data item $\overset{\wedge}{\phi}_i$ is stored in the memory, the data item is output to the FIFO buffer memory as well at the same time, thereby reducing the time required for input and output.

One preferred embodiment of the present invention will be described below.

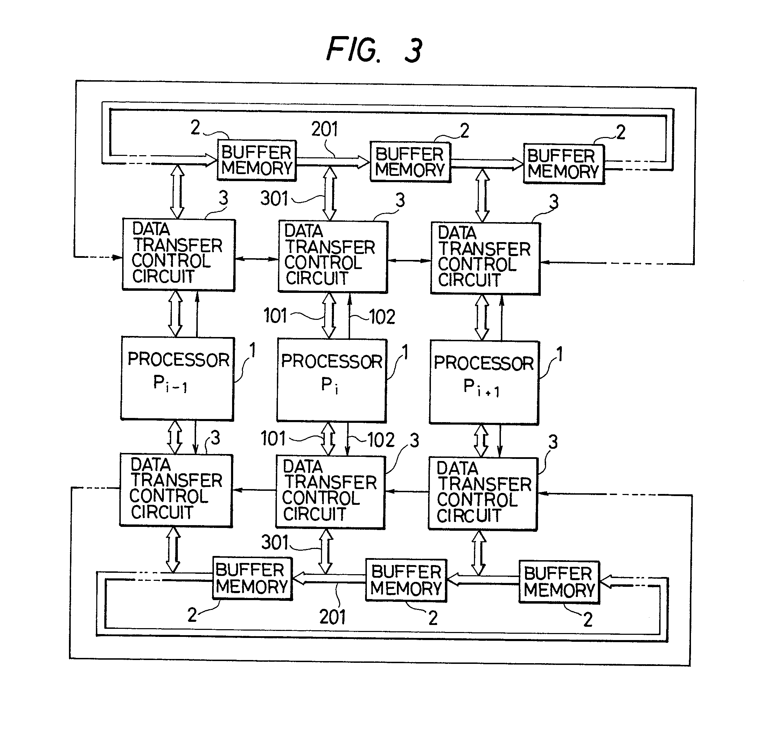

Fig. 3 shows the construction of one preferred embodiment of the parallel computer of the present invention, in which a plurality of processors are arranged in a unidimensional construction. In Fig. 3, reference numeral 1 denotes processors, reference numeral 2 FIFO buffer memories which have independently input/output ports, respectively, and reference numeral 3 data transfer control circuits. The output ports and the input ports of the respective FIFO buffer memories 2 are interconnected by unidirectional data lines 201, and each data transfer control circuit 3 is connected with each unidirectional data line 201 via a bidirectional data line 301, thereby constituting a unidirectional data transfer bus. In the calculation example shown in Fig. 1, a certain processor executes calculation on the basis of the data obtained from the calculation by both adjacent processors. Therefore, in Fig. 3, unidirectional data transfer buses are separately disposed in opposite directions. The data transfer control circuits 3 are connected to the processors 1 by bidirectional data address lines 101, respectively.

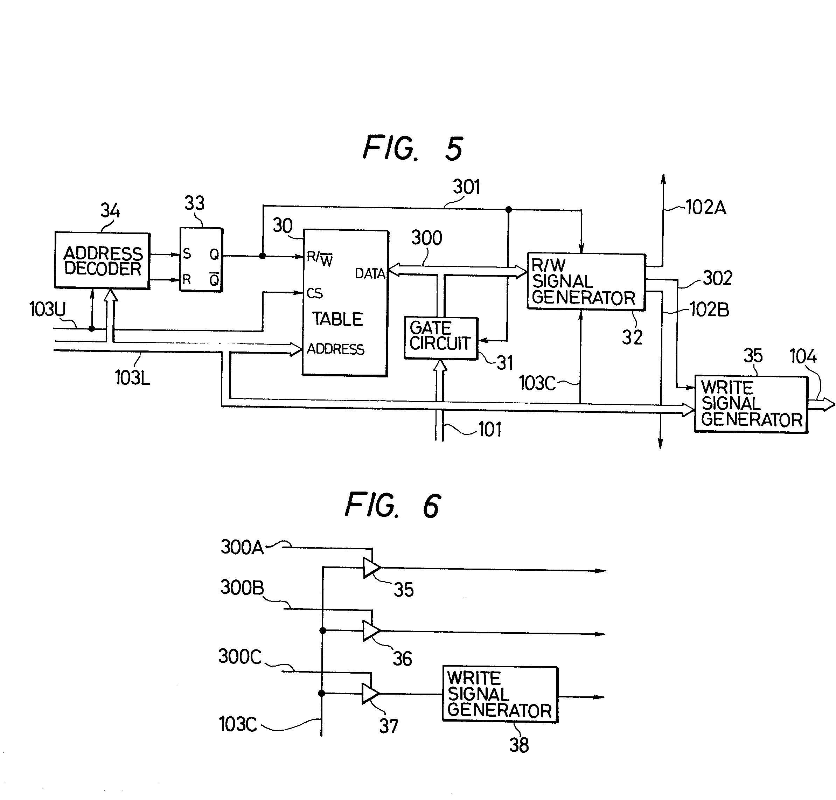

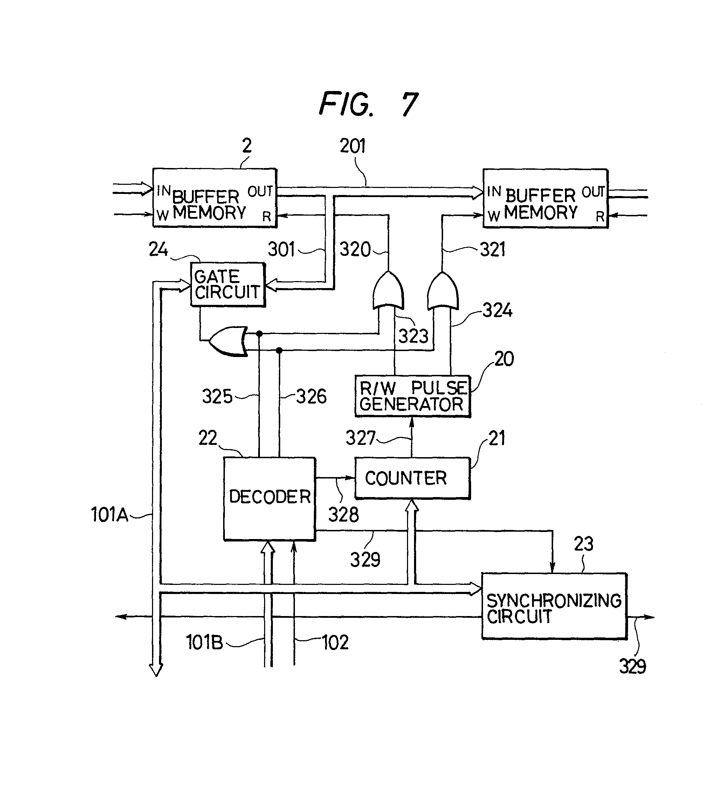

Fig. 4 shows the construction of each of the processors 1. The processor 1 is constituted by an arithmetic unit 11, an address-supervising circuit 12 and a memory 13, and the data line 101 and the address line 103 are connected into the arithmetic unit 11. Address lines 102A, 102B and 104 and the data line 101 extend out of the address-supervising circuit 12. Each of the address lines conveys the signal constituted by an address signal indicating an address contained within devices such as a memory, a read signal and a write signal, and the read signal and the write signal comprise a timing signal and a selection signal.

The operation of the present invention will be described below.

It is assumed that the memory 13 has a capacity of four words and the data $\phi_{i-1}^{(n)}$, $\phi_{i-1}^{(n)}$ and $\phi_{i+1}^{(n)}$ which are computed by the processors $P_{i-1}$, $P_i$ and $P_{i+1}$, as described above, are stored in addresses <00>, <01> and <10> within the memory 13. The binary representations of <00>, <01> and <10> correspond to the two bits on the righthand side of the respective address lines. The third bit, i.e., the one on the left hand side of each address line is a bit which is used to judge whether the data is being input to or output from other processors. When the data items $\overset{\vee}{\phi}_{i-1}^{(n)}$ and $\overset{\vee}{\phi}_{i+1}^{(n)}$ are used as an operand for calculation, the arithmetic unit 11 does not read out the data stored in the addresses <00> and <10> but transmits address signals referring to addresses <100> and <110>.

The address supervising circuit 12 monitors the address signal at the third bit from the right in the address line 103, and when the address <100> is designated, namely, when reference is made to the data $\overset{\vee}{\phi}{}_{i-1}^{(n)}$, address and write signals contained in the two rightmost bits are output to the address line 104, and a read signal is output to the address line 102 A. At this time, the data transmitted by the FIFO buffer memory 2 appears in the date line 101, and the data is input to the arithmetic unit 11, being stored in the address <00> of the memory 13. On the other hand, when the computed data $\overset{\wedge}{\phi}{}_{i}^{(n+1)}$ is to be stored in the memory 13, the arithmetic unit 11 refers to the address <101> and transmits a write signal. The address supervising circuit 12 outputs to the address line 104 a write signal and an address signal <01> constituted by the two bits on the right, and delivers write signals to the address lines 102A and 102B. At this time, the arithmetic unit 11 outputs the data item $\overset{\vee}{\phi}{}_{i}^{(n+1)}$ to the data line 101 and the data is stored in the memory 11, and FIFO buffer memories 2A and 2B. When the arithmetic unit 11 refers to the data $\phi_{i}^{(n+1)}$, $\phi_{i}^{(n)}$ and $\phi_{i+1}^{(n)}$, or when the unit 11 refers to data which is different from the data to be input and output and is previously stored in the memory 13, the arithmetic unit 11 places "0" in the third bit from the right of each address signal and refers to addresses <000>, <001>, <010> and <011>. The address-supervising circuit 12 directly outputs the signals of the address lines 104 and 103, and does not output any read signal and write signal into the address lines 102A and 102B. In order to obtain the above-described functions, the address-supervising circuit 12 includes a correspondence table corresponding to the address space of the memory 13. In numerical analysis, since the number of data and the address in which the data is stored are generally changed in accordance with each problem to be solved, it is necessary to modify the correspondence table according to each problem. To this end, the data line 101 is connected into the address-supervising circuit 12 in such a manner that the arithmetic unit 11 initializes the correspondence table prior to the parallel calculation shown in Fig. 1. Fig. 5 denotes the construction of the address supervising circuit 12. A correspondence table 30 is constituted by random access memories in which one word includes three bits. Reference numeral 31 denotes a gate circuit, reference numeral 32 a read/write signal generation circuit, reference numeral 33 a flip-flop circuit, reference numeral 34 an address decoder circuit and reference numeral 35 a write signal generation circuit.

Reference numeral 103U denotes the leftmost bit, the address line and reference numeral 103L denotes the remaining bits on the right of the address line. The leftmost-bit address line 103U is connnected to a chip selecting terminal of the correspondence table 30, and the other address line 103L is connected to an address terminal of the table 30. A signal line 300 is connected to the data terminal of the random access memory 30, and an input/output control signal is output through the gate 32. The data line 101 extending out of the arithmetic unit 11 is connected into the data terminal of the correspondence table 30 through the gate 31. The three bits on the right of the data output by the correspondence table 30 correspond to the address lines 102A, 102B and 302. For example, when the data of the table 30 represents <101> and the arithmetic unit 11 is in the state of receiving the data input, a read signal is output into the address line 102A and a write signal is output into the address line 302A. On the other hand, when the data of the random access memory 30 represents <111> and the arithmetic unit 11 is in the state of storing the data, write signals are output into the address lines 302, 102A and 102B.  In other words,
by reference to the value of the correspondence table 30
which corresponds to the data referred to by the
arithmetic unit 11, the data can be stored in the memory
13 simultaneously with the readout from the FIFO buffer
memory, and the data can be stored in the memory 13 and
in the FIFO buffer memory 2 at the same time.

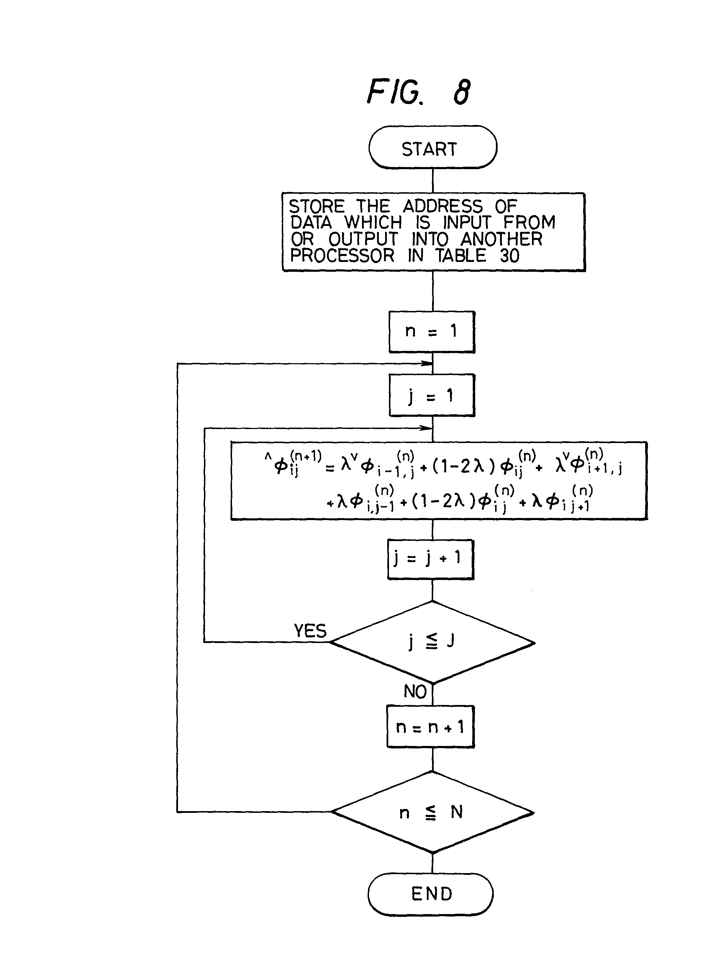

In order to initialize the correspondence table 30,
the arithmetic unit 11 accesses a specific address, and
resets a flip-flop circuit 33.  A flip-flop circuit Q
outputs a write signal to the random access memory 30,
and the correspondence table 30 is set in the write mode
and receives the date of the date line 300 supplied by
the arithmetic unit 11.  After completion of the
initialization of the correspondence table 30, the
flip-flop circuit 33 is set and the correspondence table
30 assumes the read mode.  Referring to Fig. 6 which is
a schematic view of the input/output signal generation
circuit 32, reference numerals 300A, 300B and 300C
denote the data line 300 which comprises the three bits
from the right and is connected into the correspondence
table 30.  An input/output signal 103C which is supplied
by the arithmetic unit 11 is input to a gate 35, and the
three bits 300A, 300B and 300C from the right of the
data line 300 which are output by the correspondence table 30 are delivered to gates 35, 36 and 37, respectively. A write signal generation circuit 38 fixes the read/write signal of the input/output signal 103C in the write mode "0", and directly outputs the timing signal out of the signal 103C.

Referring to Fig. 7 which shows the construction of the data transfer circuit, the circuit is constituted by a read/write pulse generation circuit 20, a counter circuit 21, a decoder 22, a synchronizing circuit 23 and a gate 24. The read/write pulse generation circuit 20 outputs a read pulse 323 and a write pulse 324, and the decoder circuit 22 outputs a read signal 325 and a write signal 326. The logical sums of the pulses 323 and 325 and the pulses 324 and 326 are obtained and are converted into a read signal 320 and a write signal 321. The signals 320 and 321 are delivered to the read terminal and the write terminal of the FIFO buffer memories 2 on the left and right sides. The data line 301 is inserted into the data line which is connected between the FIFO buffer memories 2, and is connected with the data line 101A from the arithmetic unit 11 through the bidirectional gate 24. When the processors 1 output signals to the FIFO buffer memories 2, the data is delivered to the data line 101A while the output signal is sent out to the address line 102. At the same time as the write signal 326 is being supplied from the decoder 22, the gate 24 is opened and the data is stored in the FIFO buffer memory on the right side. When the processors 1 receive the data output from the FIFO buffer memories 2, an input signal is supplied to the decoder 22 along the address line 102 and the read signal 325 is ouput from the decoder 22, so that the FIFO buffer memory 2 on the left side outputs the data into the date line 201. At the same time, the gate 24 is opened and the data is supplied to the corresponding processor 1 through the data line 101A. In order to enable the transfer of data to the right-hand processor, the data is written into the FIFO buffer memory 2 and the right-hand processor reads the data out of the FIFO buffer memory 2. When the data is to be transferred to a remote processor, the frequency of generation of the read and write pulses 320 and 321 are designated by the counter 21. In this case, the decoder 22 decodes the signal of the address line 101B and selects the counter circuit 21, so that the data of the date line 101A is stored in the counter circuit 21. In the parallel calculation shown in Fig. 1, the calculation procedure of one processor is not identical to that of another. Specifically, when the adjacent processor $P_{i-1}$ does not compute the data item $\phi_{i-1}^{(n)}$, the processor $P_i$

cannot receive the data item $\phi_{i-1}^{(n)}$. Accordingly, synchronization is needed every time n is posted. In order to perform this synchronization, the arithmetic unit 11 accesses a synchronizing circuit 23 and a flag is set up, and the flag is supplied into a synchronizing signal line 329, whereby judgement is made as to whether or not the flag is set up in each processor.

Description will be made below of the operation by which the partial differential equation (1), as shown in Fig. 1, is computed in parallel by performing calculation and input/output at the same time. The processor $P_1$ designates addresses in the memory 13 thereof in which the data $\phi_{i-1}$, $\phi_i$ and $\phi_{i+1}$ are stored, and the respective data are stored in assigned addresses <0a>, <0b>, and <0c>. Each "0" denotes the leftmost bit of the address line, and "a", "b" and "c" denote the value of the respective rightmost bits. First the processors store the data $\phi_i^{(0)}$ in the FIFO buffer memories 2. The storage of the data $\phi_i^{(n)}$ results from the operation of storing the data in the address <0b> of the memory 13 by the arithmetic unit 11, and simultaneously the arithmetic unit 11 outputs the data into the address <1b> in order to store the date in the address <0b> of the memory of the FIFO buffer memory 2. The leftmost bit of the address signal is input to the chip selection terminal of the correspondence table 30 within the address-supervising circuit 12, and the signal is changed into <1> to actuate the correspondence table 30. The correspondence table 30 is provided with input/output information corresponding to the data in the addresses of the memory 13. For example, <111> represented by a binary system is stored in the table 30 as the information corresponding to the data $\phi_i$, and the address <111> is output into the signal line 300 through the data terminal. These three bits correspond to the address line 102 A, 102B and 302, respectively, and since all the bits are "1", a write signal is supplied to the lines 102A, 102B and 302 and the data $\phi_i^{(0)}$ is stored in the address <0b> of the memory 13 and the upper and lower FIFO buffer memories 2 shown in Fig. 3. Thereafter, calculation is made as to the equations shown in Fig.1. In order to compute the parenthesized portion, $^{\vee}\phi_{i+1}^{(0)} + ^{\vee}\phi_{i-1}^{(0)}$, the arithmetic unit 11 reads the data item $^{\vee}\phi_{i+1}^{(0)} + ^{\vee}\phi_{i-1}^{(0)}$ out of the FIFO buffer memories 2. At this time, the arithmetic unit 11 refers to the addresses <1a> and <1c> and receives the data as an input. In the same manner as the storage of $^{\wedge}\phi_1^{(0)}$, the correspondence table 30 is operated when the leftmost bit takes <1>. In the correspondence table 30, the address <011> is preset as input/output information corresponding to the data item $\phi_{i+1}$ and the address <101> is preset as input/output information corresponding to the data $\phi_{i-1}$. When the data $\overset{v}{\phi}_{i-1}^{(0)}$ is input to the arithmetic unit 11, an input signal is supplied to the address line 102B and an output signal is supplied to the address line 302, and the FIFO buffer memory 2 on the upper side of Fig. 3 outputs the data item $\phi_{i-1}$ into the corresponding data line. At this time, the arithmetic unit 11 receives the data item $\phi_{i-1}^{(0)}$ and the data is stored in the address <0c> of the memory 13. Similarly, when the arithmetic unit 11 receives the data item $\phi_{i+1}^{(0)}$ from the FIFO buffer memory on the lower side of Fig. 3, the data item $\phi_{i+1}^{(0)}$ is stored in the address <0a> of the memory 13. The arithmetic unit 11 executes the calculation of $\lambda \cdot (\phi_{i+1}^{(0)} + \phi_{i-1}^{(0)})$, and in order to compute $(1 - 2\lambda) \phi_i^{(0)}$ the unit 11 reads the data item $\phi_i^{(0)}$ out of the address <0a> of the memory 13. At this time, the arithmetic unit 11 outputs an output signal to the memory 13 by reference to the address <0a>. Since the leftmost bit of the address takes "0", the correspondence table 30 is not actuated, thereby outputting no signal into the address lines 102A and 102B. Accordingly, the data can be read out of the memory 13 without any access to the FIFO buffer memory

2, so that $\check{\phi}_i^{(0)}$ is obtained by the arithmetic unit 11. The thus-obtained $\check{\phi}_i^{(0)}$ is stored in the memory 13. This process is the same as the above-described operation of storing the data item $\check{\phi}_i^{(0)}$ into the memory 13. When the arithmetic unit 11 computes $E_i^{(0)} = \frac{1}{2 \cdot \Delta x} ( \phi_{i-1}^{(0)} + \phi_{i-1}^{(0)} )$, the unit 11 reads the data $\phi_{i+1}^{(0)}$ and $\phi_{i-1}^{(0)}$ out of the memory 13 with reference to the addresses <0a> and <0c> without any access to the FIFO buffer memories. Subsequently, the above-described steps are repeated until the calculation is completed. As will be readily understood from the foregoing, since the present invention is arranged in such a manner that a single processor is connected to each of the data lines 201 connecting FIFO buffer memories, input and output operations can be performed by each processor independently and without any synchronization, whereby it is possible to execute parallal calculation in which calculation and input/ouput are performed at the same time.

Fig. 8 shows the procedure of solving the following partial differential equation which is expanded into a two-dimensional array, by using the parallel computer of this invention:

$$\frac{\partial \phi}{\partial t} = \frac{\partial^2 \phi}{\partial x^2} \quad \frac{\partial^2 \phi}{\partial y^2} \tag{3}$$

The difference equation of the equation (3) is as follows:

$$\phi_{ij}^{(n)} = \lambda \phi_{i-1,j}^{(n)} + (1 - 2\lambda) \phi_{i,j}^{(n)}$$
$$+ \lambda \phi_{i+1,j}^{(n)} + \lambda \phi_{i,j-1}^{(n)}$$
$$+ (1 - 2\lambda) \phi_{i,j}^{(n)} + \lambda \phi_{i,j+1}^{(n)} \quad (4)$$

where the number of the processors 2 is i and the number of lattice points is i × j. A single processor is assigned to every i-number of rows and j-number of lattice points are allocated to each processor. Symbols $\wedge$ and $\vee$ denotes the data which are input and output during calculation in order to solve the equation (4) by parallel calculation shown in Fig. 3. As shown in Fig. 9, if j is varied in the order of 1 to j in all the processors, the data items which are input to the FIFO buffer memories are arranged sequentially in such a manner that the data items having the smallest value of j is disposed in the first place. Accordingly, since the data items output by the FIFO buffer memories are supplied sequentially in such a manner that the data item having the smallest value of j is first sent out, the computer of the present invention can be applied to calculation as to the data constituted in accordance with a two-dimensional array. Similarly, the present invention can be adapted to calculation relating to a three-dimensional array.

CLAIMS:

1. A parallel computer comprising a plurality of processors (1), a plurality of buffer memories (2), data lines (201) interconnecting said respective buffer memories (2) in a chained manner, and a plurality of data transfer control circuits (3) which are inserted between said processors (1) and said data lines (201).

2. The computer of claim 1, wherein said buffer memories (2) are first-in, first-out buffer memories.

3. The computer of claim 2, wherein each of said processors (1) supply and receive data to and from said buffer memories (2) independently of the operating statuses of the other of said processors (1), wherein it is possible to transfer data to a remote processor (1) by presetting the number of words to be transferred by said data transfer control circuits (3).

4. The computer of claim 3, wherein each of said processors (1) includes an internal memory (13) having a correspondence table connected with the data which is computed by another processor (1) and the data which is transferred from said processor (1) to another processor (1), wherein each of said processors (1) delivers and receives data to and from said corresponding buffer memory (2) at the same time as said processor (1) executes calculation by supervising the addresses of said memory (13) which store said data transferred to and from another processor (1).

5. The computer of claim 4, wherein said correspondence table is stored in a random access memory.

## FIG. 1

```
                    ┌─────────────┐
                    │    START    │
                    └──────┬──────┘
                           │
   ┌──────────────────────────────────────────────────────┐
   │  ∧ (n+1)      v  (n)   v  (n)              (n)        │
   │  φ       = λ (φ      + φ     ) + (1− 2λ) φ            │
   │   i            i+1      i−1                i          │
   └──────────────────────────────────────────────────────┘
                           │
   ┌──────────────────────────────────────────────────────┐
   │   (n)        1      (n)      (n)                      │
   │  E      =  ───── (φ      + φ     )                    │
   │   i        2·Δx     i+1      i−1                      │
   └──────────────────────────────────────────────────────┘
                           │
                      ╱─────────╲            NO    ┌────────┐
                     ╱  n < N    ╲ ─────────────── │  END   │
                      ╲─────────╱                  └────────┘
                           │ YES
                    ┌─────────────┐
                    │  n = n + 1  │
                    └─────────────┘
```

$$\hat{\phi}_i^{(n+1)} = \lambda (\overset{v}{\phi}_{i+1}^{(n)} + \overset{v}{\phi}_{i-1}^{(n)}) + (1 - 2\lambda)\phi_i^{(n)}$$

$$E_i^{(n)} = \frac{1}{2 \cdot \Delta x}(\phi_{i+1}^{(n)} + \phi_{i-1}^{(n)})$$

n < N

n = n + 1

## FIG. 2

## FIG. 4

FIG. 3

FIG. 5

FIG. 6

0 201 088

## FIG. 7

# FIG. 8

```
                    ┌─────────────┐
                    │    START    │
                    └──────┬──────┘
                           │
          ┌────────────────┴────────────────┐
          │ STORE THE ADDRESS OF            │
          │ DATA WHICH IS INPUT FROM        │
          │ OR OUTPUT INTO ANOTHER          │
          │ PROCESSOR IN TABLE 30           │
          └────────────────┬────────────────┘
                           │
                    ┌──────┴──────┐
                    │    n = 1    │
                    └──────┬──────┘
                           │
                    ┌──────┴──────┐
                    │    j = 1    │
                    └──────┬──────┘
```

$$\hat{\phi}_{ij}^{(n+1)} = \overset{v}{\lambda} \phi_{i-1,j}^{(n)} + (1-2\lambda)\phi_{ij}^{(n)} + \overset{v}{\lambda}\phi_{i+1,j}^{(n)}$$

$$+ \lambda\phi_{i,j-1}^{(n)} + (1-2\lambda)\phi_{ij}^{(n)} + \lambda\phi_{ij+1}^{(n)}$$

```
                    ┌──────┴──────┐
                    │   j = j + 1 │
                    └──────┬──────┘
                           │
                      ╱────┴────╲
              YES    ╱           ╲
           ◄────────┤   j ≦ J    │
                     ╲           ╱
                      ╲────┬────╱
                           │ NO
                    ┌──────┴──────┐
                    │   n = n + 1 │
                    └──────┬──────┘
                           │
                      ╱────┴────╲
                     ╱           ╲
                    │   n ≦ N    │
                     ╲           ╱
                      ╲────┬────╱
                           │
                    ┌──────┴──────┐
                    │     END     │
                    └─────────────┘
```